(19) Europäisches Patentamt
European Patent Office
Office européen des brevets

(11) **EP 3 629 462 B1**

(12) **EUROPEAN PATENT SPECIFICATION**

(45) Date of publication and mention
of the grant of the patent:
**08.11.2023 Bulletin 2023/45**

(21) Application number: **19199182.7**

(22) Date of filing: **24.09.2019**

(51) International Patent Classification (IPC):
*H02M 3/158* *(2006.01)* *H02M 3/337* *(2006.01)*
*H02M 1/00* *(2006.01)*

(52) Cooperative Patent Classification (CPC):
**H02M 3/1588;** H02M 1/0009; H02M 1/0058;
Y02B 70/10

(54) **ELECTRONIC CONVERTER AND CORRESPONDING LIGHTING SYSTEM, AND METHOD OF OPERATING AN ELECTRONIC CONVERTER**

ELEKTRONISCHER UMRICHTER UND ZUGEHÖRIGES BELEUCHTUNGSSYSTEM UND VERFAHREN ZUM BETRIEB EINES ELEKTRONISCHEN UMRICHTERS

CONVERTISSEUR ÉLECTRONIQUE, SYSTÈME D'ÉCLAIRAGE CORRESPONDANT ET PROCÉDÉ DE FONCTIONNEMENT D'UN CONVERTISSEUR ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2018 IT 201800008950**

(43) Date of publication of application:
**01.04.2020 Bulletin 2020/14**

(73) Proprietor: **Inventronics GmbH**
**85748 Garching b. München (DE)**

(72) Inventors:
• **DE ANNA, Paolo**
**I-31039 Vallà di Riese Pio X (Treviso) (IT)**
• **ANGELIN, Francesco**
**I-31021 Mogliano Veneto (Treviso) (IT)**

(74) Representative: **Bosotti, Luciano**
**Buzzi, Notaro & Antonielli d'Oulx S.p.A.**
**Corso Vittorio Emanuele II, 6**
**10123 Torino (IT)**

(56) References cited:
**EP-A1- 3 217 525** **US-A1- 2012 105 039**
**US-A1- 2014 312 868**

**Description**

Field of the Invention

The description relates to electronic converters.

Description of the Related Art

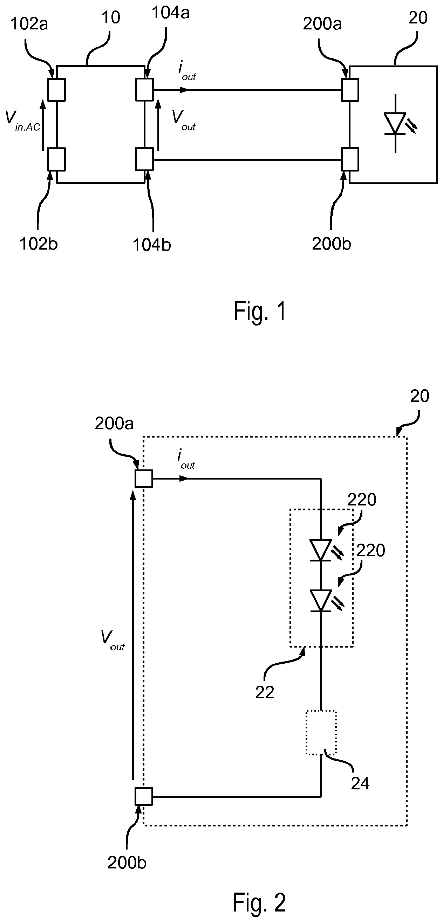

Figure 1 shows a typical lighting system including an electronic converter 10 and at least one lighting module 20. Generally speaking, a lighting module 20 includes one or more light radiation sources including e.g. at least one LED (Light Emitting Diode) or other solid-state lighting means, such as e.g. laser diodes.

Specifically, in the presently considered example, the electronic converter 10 is an AC/DC electronic converter. Therefore, the electronic converter 10 includes two input terminals 102a and 102b for the connection to the mains, and two output terminals 104a and 104b for the connection to the lighting module (s) 20. Typically, line 102a is connected to phase L and terminal 102b is connected to neutral N.

Generally speaking, the electronic converter 10 may be either a voltage generator or a current generator. Similarly, the lighting module 20 may be configured to be supplied with a regulated voltage or current.

Therefore, the electronic converter 10 receives at input, via terminals 102a and 102b, an alternated voltage $V_{in,AC}$, such as 110 or 230 VAC, and supplies at output, via positive terminal 104a and negative terminal 104b, a regulated voltage $V_{out}$, such as e.g. 12 or 24 VDC, or a regulated current $i_{out}$.

Figure 2 shows an example of a lighting module 20. Specifically, the lighting module 20 includes a positive input terminal 200a and a negative input terminal 200b, for the connection to the terminals 104a and 104b of the electronic converter 10. For example, the lighting module 20 may be connected, either directly or through a cable, to the electronic converter 10. Therefore, terminal 200a is connected to the positive terminal 104a, and terminal 200b is connected to the negative terminal 104b, and thus the lighting module 20 receives the regulated voltage $V_{out}$ or the regulated current $i_{out}$.

In the presently considered example, the lighting module 20 is a LED module including one or more LEDs (or laser diodes) 220, connected between the terminals 200a and 200b. For example, module 20 may include a LED chain or string 22, wherein a plurality of LEDs 220 (or similarly laser diodes) are connected in series.

If the lighting module 20 is supplied with a regulated voltage, the lighting module 20 typically includes a current regulator 24, connected in series with the LED string 22. In the simplest of cases, the current regulator 24 may be a resistor or a linear current regulator. The current regulator 24 may also be implemented by current mirrors or by a switched mode current source, typically including an inductor and an electronic switch.

Generally speaking, also a plurality of lighting modules 20 may be connected to the electronic converter 10. For example, if a regulated voltage $V_{out}$ is used, the lighting modules 20 may be connected in parallel to the terminals 104a and 104b. On the other hand, if a regulated current $i_{out}$ is used, the lighting modules 20 are typically connected in series between the terminals 104a and 104b.

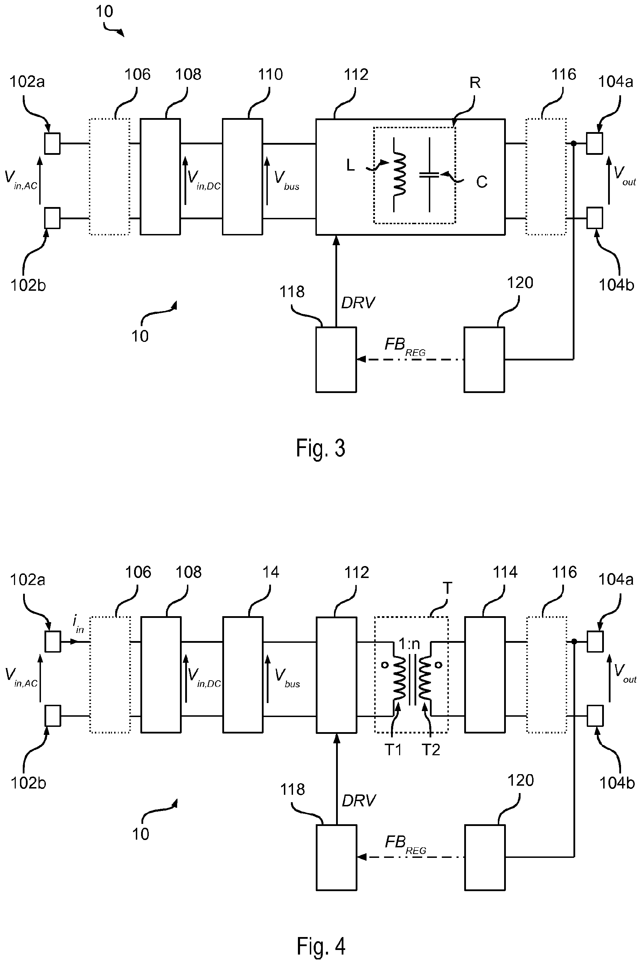

Figure 3 shows the operating arrangement of an electronic converter 10.

In the presently considered example, converter 10 includes a rectification circuit 108 and a switching stage 112.

Specifically, the input of the rectification circuit 108, such as e.g. a diode bridge, is connected (e.g. directly) to the terminals 102a and 102b. Therefore, the rectification circuit 108 receives at input the input voltage $V_{in,AC}$ and provides at output a DC voltage $V_{in,DC}$. Generally speaking, between the input terminals 102a and 102b and the rectification circuit 108 there may also be provided a filter circuit 106, configured to filter the noise produced by the electronic converter 10.

Generally speaking, between the rectification circuit 108 and the switching stage 112 there may be provided a filter circuit 110, such as e.g. a capacitor connected in parallel with the output terminals of the rectification circuit 108. Therefore, in this case, the filter circuit 108 receives (e.g. directly) the voltage $V_{in,DC}$ and provides at output a filtered voltage, typically called a bus voltage, $V_{bus}$. In this case, therefore, the switching stage 112 receives at input the voltage $V_{bus}$. As an alternative, or in addition to filter circuit 110, there may be provided an electronic converter with power factor correction (PFC).

Generally speaking, the switching stage 112 includes one or more electronic converters, adapted to control the flow of a current through a reactive element R. Typically, such a reactive element R is a resonant circuit, including one or more inductive elements L, such as e.g. inductors, and one or more capacitive elements C, such as e.g. capacitors. To this end, the switching stage 112 is typically configured to apply an alternated voltage across said reactive circuit R. For example, the switching frequency of stage 112 typically amounts to 1 kHz - 500 kHz, preferably to 20 kHz - 200 kHz.

For safety reasons, the electronic converter 10 is often required to be an insulated converter.

As shown in Figure 4, in this case, the electronic converter 10 includes at least one transformer T, including a primary winding T1 and a secondary winding T2.

In this case, the switching stage 112 includes one or more electronic switches, adapted to control the flow of a current through a primary winding T1 of the transformer, and the inductive element L of reactive circuit R often corresponds to the magnetizing and/or leakage inductances of transformer T. As an alternative or in addition, the reactive circuit R may include one or more inductive, L, and/or capacitive, C, elements, which are connected in series and/or in parallel with primary winding T1 and/or secondary winding T2 of the transformer. Therefore, generally speaking, transformer T may be a part of the resonant circuit R.

The alternated voltage on the secondary side of transformer T is then converted by a rectification circuit 114, which typically includes one or more diodes (e.g. a diode bridge), into a DC voltage. Therefore, the input of the rectification circuit 114 is connected (e.g. directly) to the terminals of the secondary winding T2 of transformer T, and provides at output a DC voltage/current, which in the simplest of cases corresponds to the output voltage/current $V_{out}/i_{out}$.

In both cases there may be provided a further filter circuit 116, which is connected between the output of converter 10, i.e. the terminals 104a and 104b.

Typically, the switching stage 112 is driven by a control circuit 118, i.e. the control circuit 118 is configured to generate one or more drive signals *DRV* for driving the switching stage 112, so as to regulate the output voltage $V_{out}$ or the output current $i_{out}$ to a desired value. Generally speaking, the control circuit 118 may be any analog or digital circuit, such as e.g. a microprocessor programmed via software code. As shown in Figure 3, a feedback circuit 120 is typically used to this end, and it provides a feedback signal $FB_{REG}$ which is determined as a function of the output voltage $V_{out}$ (for a voltage generator) or of the output current $i_{out}$ (for a current generator).

For example, the operation of such an insulated electronic converter and of possible rectification circuits 114 (with the optional use of an additional transformer with intermediate connection) and of filter circuits 116 is described in PCT/IB2016/055923, the content whereof is incorporated in the present specification as a reference.

The various topologies of either non-insulated (boost, buck, buck-boost, etc.) or of insulated (flyback, forward, resonant, etc.) electronic switching converters are well known, and the main topologies are described e.g. in L. Wuidart, "Application Note - Topologies For Switched Mode Power Supplies", STMicroelectronics, 1999, the content whereof is incorporated in the present specification by way of reference.

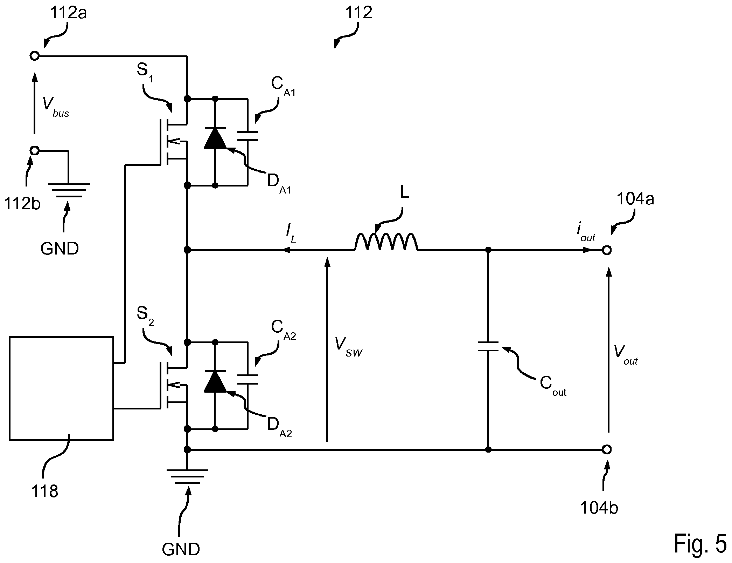

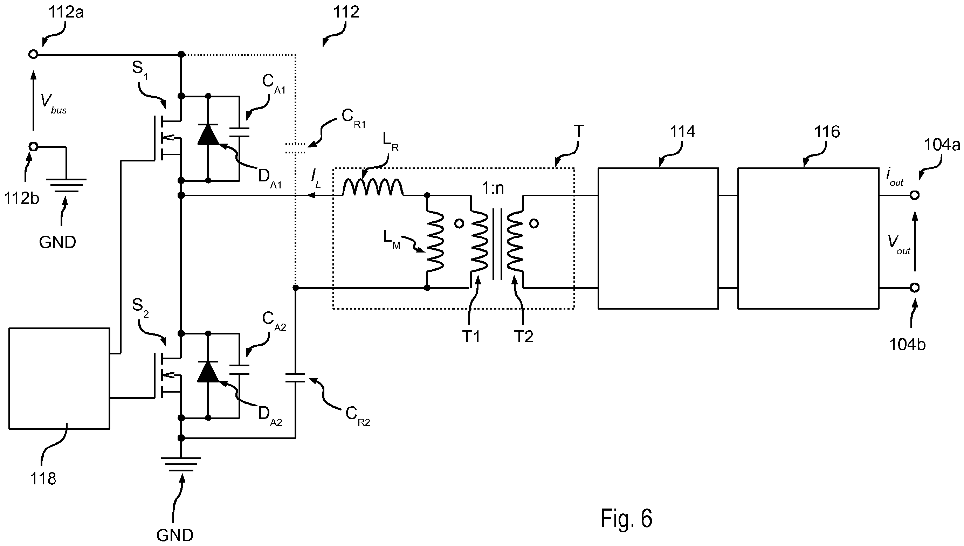

Figures 5 and 6 show two examples of a switching stage 112.

Generally speaking, switching stage 112 receives at input, through two input terminals 112a/112b, the direct voltage $V_{bus}$, wherein terminal 112b represents a reference voltage, e.g. a ground GND.

In the presently considered example, the switching stage 112 includes a half-bridge, i.e. two electronic switches $S_1$ and $S_2$ which are connected in series between both input terminals 112a/112b, wherein the switching of the electronic switches $S_1$ and $S_2$ is driven via respective signals $Q_1$ and $Q_2$ generated by a control unit 118. For example, in the example said electronic switches $S_1$ are $S_2$ are Field-Effect Transistors (FETs), e.g. MOSFETs (Metal-Oxide-Semiconductor Field-Effect Transistors), such as e.g. n-channel FETs. Said switches $S_1$ and $S_2$ may be provided, in a parallel connection, with respective capacitances $C_{A1}$, $C_{A2}$ (such as e.g. the parasitic capacitances of the FETs) and respective diodes $D_{A1}$, $D_{A2}$ (such as e.g. the body diodes of the FETs).

Typically, the control unit 118 is configured to switch switches $S_1$ and $S_2$ alternatively, i.e. only one of the switches $S_1$ and $S_2$ is closed at a given moment. Generally speaking, as will be described in the following, it is also possible to provide intermediate intervals, wherein neither switch, $S_1$ or $S_2$, is closed.

In the presently considered example, switches $S_1$ and $S_2$ therefore control the current flowing through the reactive element R. Typically, one of the switches (typically $S_1$) represents a main switch, which controls the current flowing from the input terminals 112a/112b towards the reactive element R, and the other switch (typically $S_2$) is an auxiliary switch, which typically performs the role of current freewheeling.

For example, in Figure 5, the reactive element R is implemented by an inductor L and a capacitor $C_{out}$. Specifically, in the presently considered example, a first terminal of inductor L is connected to the intermediate point between both electronic switches $S_1$ and $S_2$. On the other hand, the second terminal of inductor L is connected, via a capacitor $C_{out}$, to the second input terminal 112b, thereby implementing a buck converter. Therefore, switches $S_1$ and $S_2$ may be used for selectively connecting the first terminal of inductor L to voltage $V_{bus}$ or to ground GND, thereby controlling the flow of current through reactive circuit R, which is comprised of inductor L and capacitor $C_{out}$. For example, in a buck converter, the voltage across capacitor $C_{out}$ corresponds to the output voltage $V_{out}$, i.e. terminal 104a is connected (e.g. directly) to the intermediate point between inductor L and capacitor $C_{out}$, and terminal 104b is connected (e.g. directly) to terminal 112b.

On the other hand, in Figure 6, the inductive element L is implemented by means of a transformer T, including a primary winding T1 and a secondary winding T2. Generally speaking, a transformer T may be modelled as an ideal transformer with a given winding ration 1:n, an inductance $L_M$ representing the magnetizing inductance of transformer T and an inductance $L_R$ which represents the leakage inductance, which are shown in Figure 6 on the primary side of transformer T. However, the inductive element $L_R$ may also be implemented by connecting one or more inductors in series and/or in parallel with the primary winding T1 and/or the secondary winding T2.

Specifically, in the presently considered example, a first terminal of primary winding T1 is connected to the intermediate point between both electronic switches $S_1$ and $S_2$. On the other hand, the second terminal of primary winding T1 is connected, through a first capacitor $C_{R1}$, to the first input terminal 112a, and/or, through a second capacitor $C_{R2}$, to the second input terminal 112b / to ground GND. Generally speaking, the second terminal of primary winding T1 may also be connected to a direct voltage, e.g. $V_{bus}$ (for example in order to implement a forward or flyback converter), or to GND. Finally, it is possible to resort to a full bridge arrangement H, wherein each capacitor $C_{R1}$ and $C_{R2}$ is replaced with a respective electronic switch.

As a matter of fact, generally speaking, also in this case switches $S_1$ and $S_2$ may be used for selectively connecting the first terminal of reactive element R (which includes the inductances of transformer T, capacitors $C_{R1}$ and $C_{R2}$ and optionally other inductors and/or capacitors connected in series and/or in parallel with primary winding T1 and/or with secondary winding T2) to voltage $V_{bus}$ or to ground GND, thereby controlling the flow of current through reactive element R.

In Figure 5, capacitor $C_{out}$ is typically a (large sized) capacitor which stabilizes the output voltage $V_{out}$ at the second terminal of inductive element L.

On the other hand, in Figure 6, capacitors $C_{R1}$ and $C_{R2}$ may also be sized in such a way that the reactive element R (with the inductive element $L_M$ and/or $L_R$) has a resonant frequency of the same order of magnitude of the switching frequency of the electronic converter, as it is the case e.g. in a LLC converter.

The switching stages 112 shown in Figures 5 and 6 offer the advantage that, by using a suitable control arrangement, switches $S_1$ and $S_2$ may be closed at zero voltage, i.e. so-called Zero Voltage Switching, ZVS.

Substantially, when switch $S_1$ is closed, voltage $V_{SW}$ at the intermediate point between switches $S_1$ and $S_2$ (for example voltage $V_{DS}$ between the drain and source terminals of a FET $S_2$) corresponds to voltage $V_{bus}$, i.e. $V_{SW} = V_{bus}$. Once switch $S_1$ is then opened, and assuming that the current $I_L$ which is provided by reactive element R is negative (i.e., the reactive element R absorbs current), then said current $I_L$ discharges capacitance $C_{A2}$ and charges capacitance $C_{A1}$, thereby lowering voltage $V_{SW}$. Generally speaking, when capacitance $C_{A2}$ is discharged, diode $D_{A2}$ may keep voltage $V_{SW}$ at ground GND (i.e. $V_{SW} = -V_{TH,DA2}$, also taking into account the voltage drop $V_{TH,DA2}$ at diode $D_{A2}$). Therefore, this creates the ZVS condition for switch $S_2$.

Therefore, from this moment on switch $S_2$ may be closed substantially at zero voltage. When switch $S_2$ is closed, the intermediate point between switches $S_1$ and $S_2$ is connected to ground, i.e. $V_{SW} = 0$. When switch $S_2$ is subsequently opened, and assuming that the current $I_L$, which is provided by the reactive element R, is positive (i.e. the reactive element R provides a current), at this point said current $I_L$ charges capacitance $C_{A2}$ and discharges capacitance $C_{A1}$, thereby increasing voltage $V_{SW}$. Generally speaking, when capacitance $C_{A2}$ is charged, diode $D_{A1}$ may keep the voltage $V_{SW}$ at $V_{bus}$ (i.e. $V_{SW} = V_{bus} + V_{TH,DA1}$, also taking into account the voltage drop $V_{TH,DA1}$ at diode $D_{A1}$). Therefore, this creates the ZVS condition for switch $S_1$.

The ZVS switching is typically employed in electronic converters of low to medium power. Thanks to said ZVS switching it is possible to reduce the electrical losses due to switches $S_1$ and $S_2$. Moreover, it is possible to reduce electromagnetic emissions. As previously explained, the ZVS switching is achieved by using the energy stored in the reactive element R of switching stage 112. Said energy should therefore be controlled particularly at the moment when switch $S_1$ is opened and when switch $S_2$ is opened. For example, when the amplitude of current $I_L$ is too low at said instants, current $I_L$ may not be sufficient to charge / discharge capacitances $C_{A1}$ and $C_{A2}$. On the other hand, an excessively high current might lead to a high Root Mean Square (RMS) of the current. This problem arises especially for the auxiliary switch, while the same problem is absent for the main switch, because the amplitude of current $I_L$ during the off state of the main switch is normally high.

Specifically, the present application relates to an electronic converter according to the preamble of Claim 1, which is known, e.g. from document US 2014/312868 A1.

Object and Summary

The present specification aims at providing solutions for controlling the operation of an electronic converter, in order to achieve a Zero Voltage Switching by resorting to a self-adjusting approach, which reduces the circulating RMS current.

According to various embodiments, said object is achieved thanks to an electronic converter having the features set forth in the claims that follow. The claims also concern a corresponding lighting system and a method of operating an electronic converter.

The claims are an integral part of the technical teaching provided herein with reference to the invention.

Brief Description of the Annexed Views

Embodiments will now be described, by way of non-limiting example only, with reference to the annexed views, wherein:

- Figures 1 to 6 have already been described in the foregoing,
- Figure 7 shows an embodiment of a switching stage including a measurement circuit for an electronic converter;
- Figure 8 shows an example of the operation of the switching stage in Figure 7;
- Figure 9 shows a first example of the operation of the measurement circuit in Figure 7;
- Figure 10 shows a second example of the operation of the measurement circuit in Figure 7;
- Figures 11a and 11b show a first embodiment of the driving performed by the switching stage in Figure 7;
- Figure 12a shows a further embodiment and figures 12b and 12c show further unclaimed examples of the driving performed by the switching stage in Figure 7;
- Figure 13 shows a further unclaimed example of a switching stage including a measurement circuit for an electronic converter; and
- Figure 14 shows an example of operation of the measurement circuit in Figure 13.

Detailed Description of Embodiments

In the following description, various specific details are given to provide a thorough understanding of the embodiments. The embodiments may be practiced without one or several specific details, or with other methods, components, materials, etc. In other instances, well-known structures, materials or operations are not shown or described in detail in order to avoid obscuring various aspects of the embodiments.

Reference throughout this specification to "one embodiment" or "an embodiment" means that a particular feature, structure, or characteristic described in connection with the embodiment is included in at least one embodiment. Thus, the possible appearances of phrases such as "in one embodiment" or "in an embodiment" in various places throughout this specification are not necessarily all referring to the same embodiment. Furthermore, particular features, structures, or characteristics may be combined in any suitable manner in one or more embodiments.

The headings provided herein are for convenience only, and therefore do not interpret the extent of protection or scope of the embodiments.

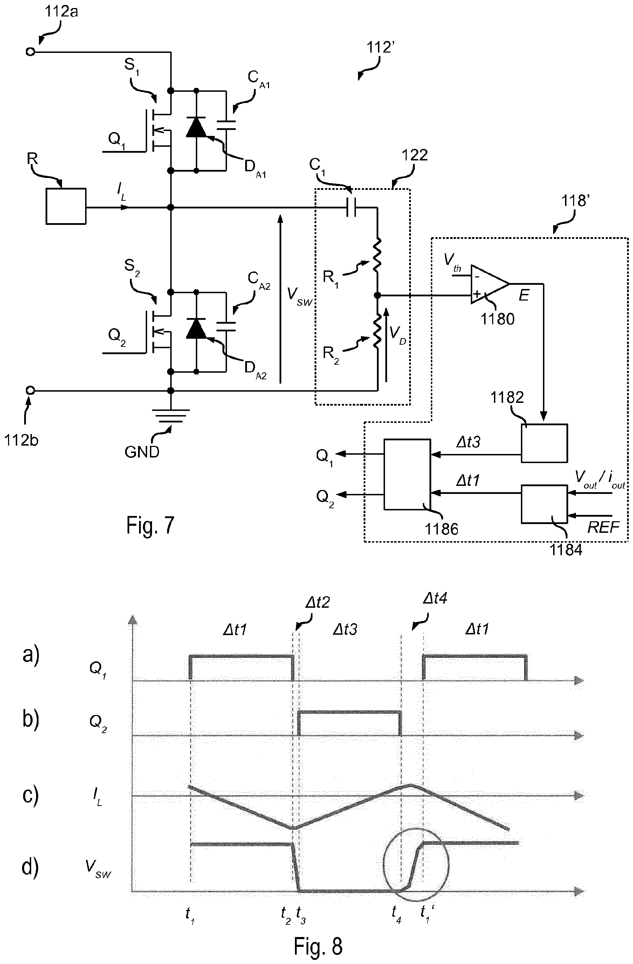

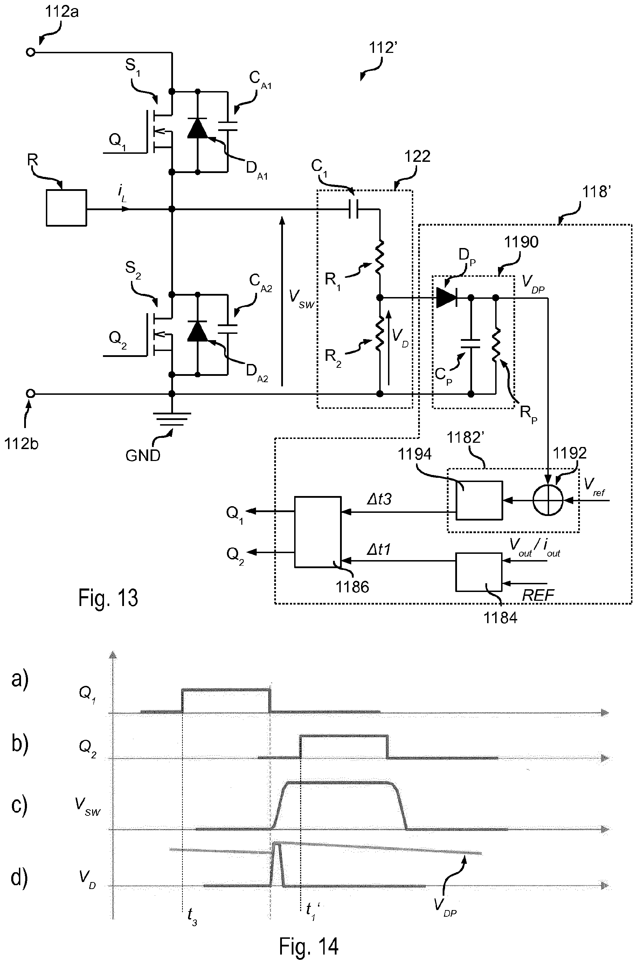

In the following Figures 7 and 13, the parts, the elements or the components which have already been described with reference to Figures 1 to 6 are denoted with the same references which have previously been used in said Figures; the description of said previously described elements will not be repeated in the following, in order not to overburden the present detailed description.

As previously mentioned, the present specification provides solutions for controlling the operation of an electronic converter in such a way as to implement a Zero Voltage Switching. For a general description of said electronic converter, reference may therefore be made to the descriptions of Figures 1 to 6.

Figure 7 shows a first embodiment of a switching stage 112' for an electronic converter according to the present specification. For example, such a switching stage 112 may be used in the electronic converters described with reference to Figures 1 to 6, and the description thereof applies in its entirety.

Specifically, in the presently considered embodiment, the switching stage 112' again includes at least two switches $S_1$ and $S_2$, which are connected (e.g. directly) between two terminals 112a and 112b, configured to receive voltage $V_{bus}$ (see also Figures 3 and 4). Moreover, the intermediate point between both switches $S_1$ and $S_2$ is connected to a first terminal of a reactive circuit R, in such a way as to control the flow of current through reactive circuit R. The specific implementation of the reactive element R (inductor L and/or transformer T, and one or more capacitors) and the connection of the other terminals of reactive circuit R are not particularly relevant for the operation of the Zero Voltage Switching which constitutes the object of the present specification. Generally speaking, the reactive circuit R is interposed between the output of the electronic converter and the intermediate point between switches $S_1$ and $S_2$, and switches $S_1$ and $S_2$ may be used for controlling the flow of current through the reactive circuit R, thereby controlling the energy transfer towards outputs 104a and 104b of the electronic converter. However, reference may be made to Figures 5 and 6 for exemplary switching stages 112.

In various embodiments, as it is the case with typical ZVS converters, the switching stage 112' should be sized so that, when switch $S_1$ is opened, the energy stored in the reactive element R is sufficient to discharge capacitance $C_{A2}$ and to charge capacitance $C_{A1}$ until voltage $V_{SW}$ is substantially zero. On the other hand, when switch $S_2$ is opened, the energy stored in the reactive element R should be sufficient to charge capacitance $C_{A2}$ and to discharge capacitance $C_{A1}$ until voltage $V_{SW}$ is substantially $V_{bus}$.

One of the switches $S_1$ and $S_2$ often corresponds to a main switch, which controls the flow of energy towards outputs 104a and 104b. On the other hand, the other switch is typically only an auxiliary switch, which enables achieving the ZVS condition for the main switch. For example, in Figure 5, the main switch is switch $S_1$ and the auxiliary switch is switch $S_2$. On the other hand, in Figure 6, by using only capacitor $C_{R2}$, the main switch is switch $S_1$ and the auxiliary switch is switch $S_2$. The function of both switches may be reversed, e.g. by reversing the connection of secondary winding T2. Therefore, typically, the control circuit 118' varies the duration of the closed state of the main switch, in order to control the output voltage $V_{out}$ or the output current $i_{out}$.

Typically, therefore, when the main switch is opened, the energy stored in the reactive element R is high and sufficient to charge the capacitance ($C_{A1}$ or $C_{A2}$) associated with the main switch, and to discharge the capacitance ($C_{A1}$ or $C_{A2}$) associated with the auxiliary switch. On the other hand, an additional control is required to control the instant when the auxiliary switch is opened, because the energy stored in the reactive element R is typically low at that instant.

For example, referring to Figure 5, the energy stored in the reactive element R may be estimated as a function of current $I_L$ flowing through inductor L. Therefore, control unit 118' may implement a ZVS by measuring said current $I_L$. However, this current measurement generates electrical losses.

Moreover, in electronic converters including a more complex reactive element R, e.g. in the case of an LLC converter, or generally speaking in a reactive circuit R including a plurality of harmonics, current $I_L$ is not necessarily indicative of the energy stored in the reactive element R. Therefore, an alternative solution involves detecting the ZVS condition through a direct measurement of voltage $V_{SW}$.

For example, solutions of this kind are described in the documents APPLICATION NOTE U138, "Zero Voltage Switching Resonant Power Conversion", Texas Instruments, 1999, US 7,450,404 B2 or US 2016/0141960 A1.

On the other hand, embodiments of the present specification are based on a different control of the switching of switches $S_1$ and $S_2$. Specifically, the electronic converter includes a measurement circuit 122, such as for example an analog differentiator, configured to detect a measurement signal indicative of the derivative of the voltage across the main switch, e.g. a measurement signal which is proportional to the derivative of said voltage, and the control circuit 118' is configured to vary the duration of the closed state of the auxiliary switch as a function of the measurement signal.

Specifically, as described in the foregoing, the switching stage 112' includes:

- a terminal 112a and a second terminal 112b, for receiving a direct current $V_{bus}$;
- a first and a second electronic switch, $S_1$ and $S_2$, which are connected (e.g. directly) between terminals 112a and 112b, wherein a respective capacitance $C_{A1}/C_{A2}$ is associated to each switch $S_1/S_2$;
- a reactive element / circuit R, which is connected at least between the intermediate point between the switches $S_1$ and $S_2$, and the output 104a/104b of electronic converter 10; and
- a control circuit 118', configured to generate a drive signal $Q_1$ for switch $S_1$ and a drive signal $Q_2$ for switch $S_2$.

Figure 8 shows an embodiment of the driving performed by control circuit 118'. Specifically, in the presently considered embodiment, control circuit 118' is configured to repeat the following steps periodically:

- after a time interval $\Delta t1$, opening switch $S_1$;
- after a time interval $\Delta t2$, closing switch $S_2$;
- after a time interval $\Delta t3$, opening switch $S_2$; and
- after a time interval $\Delta t4$, closing switch $S_1$. Therefore, a switching cycle has a duration:

$$T_{SW} = \Delta t1 + \Delta t2 + \Delta t3 + \Delta t4 \qquad (1)$$

This driving arrangement may be applied irrespective of which switch, $S_1$ or $S_2$, is the main switch or the auxiliary switch.

For example, in various embodiments, the main switch is switch $S_1$ and the auxiliary switch is switch S2.

In this case, as shown in Figure 8, the control circuit 118 closes switch $S_1$ at an instant $t_1$, and the reactive circuit R is connected to voltage $V_{BUS}$, i.e. $V_{SW} = V_{BUS}$, thereby transferring energy to the reactive component R (because the main switch is switch $S_1$). This is schematically shown also in Figure 8c, wherein current $I_L$ provided by reactive circuit R decreases linearly in the exemplary case (wherein it is assumed that no additional harmonics are present).

After interval $\Delta t1$, the control circuit 118' opens switch $S_1$ at an instant $t_2$. Therefore, during interval $\Delta t2$, the intermediate point between the switches is not connected to a direct voltage. However, in this case, the capacitances $C_{A1}$ and $C_{A2}$ are connected to the reactive circuit R. Specifically, in the presently considered embodiment, it is assumed that the current $I_L$ provided by reactive circuit R is negative at instant $t_2$ (i.e., the reactive circuit R absorbs energy). As a consequence, capacitance $C_{A2}$ is discharged and capacitance $C_{A1}$ is charged, i.e. voltage $V_{SW}$ decreases.

After interval $\Delta t2$, control circuit 118' closes switch $S_2$ at an instant $t_3$. Therefore, the reactive circuit R is connected to ground GND, i.e. $V_{SW} = 0$. This is schematically shown also in Figure 8c, wherein the current $I_L$ provided by the reactive circuit R increases linearly in the exemplary case (wherein it is assumed that no additional harmonics are present).

After interval $\Delta t3$, control circuit 118' opens switch $S_2$ at an instant $t_4$. Therefore, during interval $\Delta t3$, the intermediate point between the switches is not connected to a direct voltage, and the capacitances $C_{A1}$ and $C_{A2}$ are again connected to the reactive circuit $R_2$. Specifically, in the presently considered embodiment, it is assumed that the current

$I_L$ provided by the reactive circuit is positive at instant $t_4$ (i.e. the reactive circuit R provides energy). As a consequence, capacitance $C_{A2}$ is charged and capacitance $C_{A1}$ is discharged, i.e. voltage $V_{SW}$ increases.

Finally, after interval $\Delta t4$, the control circuit 118' again closes switch $S_1$ at the following instant $t_1'$.

As explained in the foregoing, one of the switches is a main switch (e.g. switch $S_1$) and the other switch is an auxiliary switch (e.g. switch $S_2$). The control circuit 118' is configured to vary the duration of the interval during which the main switch is closed ($\Delta t1$ in the exemplary case), so as to achieve a required output voltage $V_{out}$ or output current $i_{out}$.

On the other hand, the control circuit 118' is configured to vary the duration of the interval during which the auxiliary switch is closed ($\Delta t3$ in the exemplary case), so as to create the ZVS condition for the switching of the main switch.

The solutions for regulating the duration of the closed state of the main switch are well known in the art. For example, typically the duration of the closed state of the main switch is varied in order to achieve a required output voltage or a required output current. For example, this is schematically shown in Figure 7, wherein the control circuit 118' includes a circuit 1184 configured to determine a first signal indicative of said duration (e.g. $\Delta t1$) as a function of the output voltage $V_{out}$ or the output current $i_{out}$ and a reference signal *REF*. For example, circuit 1184 may be a regulator with an integral (I) component and optionally, in addition, with a proportional (P) and/or derivative (D) component. The first signal is then forwarded to a driver circuit 1186, which generates the drive signals $Q_1$ and $Q_2$ for switches $S_1$ and $S_2$.

On the other hand, the present specification mainly concerns the driving of the auxiliary switch, specifically the duration of interval ($\Delta t3$) during which the auxiliary switch is closed, and the duration of the following interval ($\Delta t4$) during which both switches are opened.

Specifically, in embodiments, the duration of interval ($\Delta t4$) between the instant ($t_4$) when the auxiliary switch is opened and the instant ($t_1'$) wherein the main switch is closed is constant, and the control circuit regulates the duration of interval *($\Delta t3$)* during which the auxiliary switch is closed. The duration of interval ($\Delta t2$) between the instant ($t_2$) when the main switch is opened and the instant ($t_3$) when the auxiliary switch is closed is not particularly relevant, and said duration may be e.g. constant.

Specifically, as explained in the foregoing, in embodiments the electronic converter includes, to this end, a measurement circuit 122, configured to generate a signal $V_D$ indicative of the derivative of voltage $V_{SW}$ at the intermediate point between switches $S_1$ and $S_2$.

Generally speaking, the measurement circuit 122 is connected between the intermediate point between switches $S_1$ and $S_2$ and a reference voltage, e.g. terminal 102a or terminal 102b. Therefore, in embodiments, the measurement circuit 122 is configured to generate a signal $V_D$ indicative of the derivative of the voltage across switch $S_1$ or switch $S_2$. Preferably, the measurement circuit is connected across switch $S_2$, because said switch is connected to ground GND.

In the embodiment shown in Figure 7, the measurement circuit 122 includes a capacitor $C_1$ and at least one resistor connected in series. Therefore, capacitor $C_1$ generates a current which is proportional to the derivative of voltage $V_{SW}$, and the resistor generates a voltage which is proportional to said current. For example, in the presently considered embodiment, as a matter of fact two resistors $R_1$ and $R_2$ are used, and they implement a voltage divider.

Specifically, in the presently considered embodiment, a first terminal of capacitor $C_1$ is connected (e.g. directly) to the intermediate point between switches $S_1$ and $S_2$. On the other hand, the second terminal of capacitor $C_1$ is connected, via the voltage divider $R_1/R_2$, to terminal 102b (ground GND), wherein signal $V_D$ corresponds to the voltage at the intermediate point between both resistors $R_1$ and $R_2$ (with reference to ground GND). Therefore, in the presently considered embodiment, the transfer function of measurement circuit 122 is:

$$VD(s) = \frac{sC_1R_2}{1 + sC_1(R_{1+}R_2)} \times V_{SW}(s)$$

Substantially, in the presently considered embodiment, voltage $V_D$ corresponds to the derivative of voltage $V_{SW}$, filtered by a low-pass filter. By using, for resistor $R_1$, a resistance which is much higher than the resistance for resistor $R_2$ (for example $R_1 > 5 \times R_2$), the time constant of the filter is mainly determined by the resistance of resistor $R_1$, while resistor $R_2$ and capacitor C control the derivation coefficient.

In the presently considered embodiment, wherein the previously described signal $V_D$ is indicative of the derivative of voltage $V_{SW}$, the control circuit 118' should therefore monitor:

- variations with positive gradient (interval $\Delta t4$) when the main switch is switch $S_1$; or
- variations with negative gradient (interval $\Delta t2$) when the main switch is switch $S_2$.

In the control circuit 118' is configured to compare signal $V_D$ with at least one reference threshold $V_{th}$. For example, for the exemplary instance, the control circuit may detect whether the amplitude (absolute value) of signal $V_D$ exceeds threshold $V_{th}$, which indicates a strong variation of voltage $V_{SW}$.

Specifically, the inventors have remarked that events with a high variation of voltage $V_{SW}$ are generated in two distinct instances.

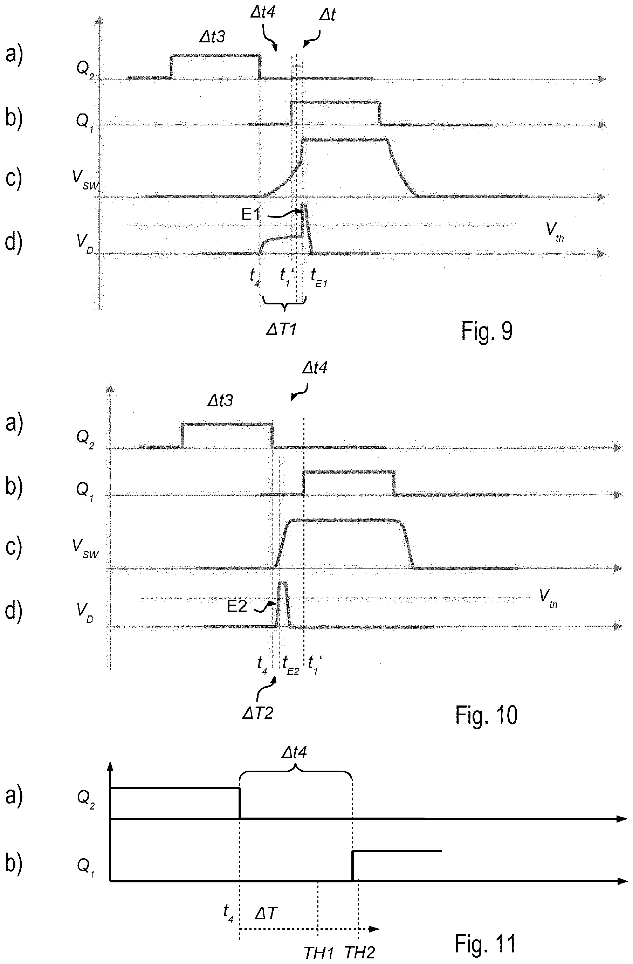

The first instance is shown in Figure 9. Specifically, in this case, the main switch ($S_1$ in the presently considered exemplary instance) is closed at instant $t_1$, not at zero voltage.

Specifically, as previously described, the control circuit 118' generates the drive signal for the auxiliary switch in such a way as to open the auxiliary switch after a variable duration ($\Delta t3$ in the exemplary instance) and subsequently closes the main switch after a constant duration ($\Delta t4$ for the exemplary instance). If the voltage across the main switch is not zero, e.g. voltage $V_{SW}$ is lower than $V_{bus}$ for the exemplary instance, closing the main switch therefore strongly varies voltage $V_{SW}$ (see Figure 9c).

For example, in the presently considered embodiment, as also shown in Figures 9a and 9c, the control circuit 118' changes the drive signal $Q_2$ for the auxiliary switch at instant $t_4$, by opening the auxiliary switch. Therefore, from instant $t_4$, the current $I_L$ provided by the reactive circuit R charges the capacitance of the auxiliary switch and discharges the capacitance of the main switch. Moreover, in this case, too, the control circuit 118' changes the drive signal $Q_1$ for the main switch at instant $t_1'$, by closing the main switch. More specifically, as shown in Figures 9b and 9c, because of the activation delays of the driver circuit and of the switch, switch $S_1$ is closed only after an interval $\Delta t$. Therefore, the closing of the main switch actually takes place (with reference to the start of interval $\Delta t4$) at an instant $t_{E1}$ after a duration $\Delta T1 = \Delta t4 + \Delta t$.

In the presently considered example, however, the voltage across the main switch is not zero at instant $t_{E1}$, i.e. voltage $V_{SW}$ is lower than voltage $V_{bus}$. Thus, the voltage across the main switch undergoes, at instant $t_{E1}$, a strong variation, i.e. the value of signal $V_D$ is high.

The second instance is shown in Figure 10. Specifically, in this instance, the energy stored in the reactive circuit R and provided to capacitances $C_{A1}$ and $C_{A2}$ is too high.

Therefore, as shown in Figure 10c, the capacitance of the main switch is discharged too rapidly, e.g. voltage $V_{SW}$ increases rapidly and reaches voltage $V_{bus}$ much earlier than the end of interval $\Delta t4$. Therefore, this leads to a high variation of voltage $V_{SW}$, i.e. to a high value of signal $V_D$. Therefore, in this instance, the control circuit 118' may detect, at an instant $t_{E2}$, a second event E2 when signal $V_D$ exceeds threshold $V_{th}$, wherein said instant (with reference to the start of interval $\Delta t4$) occurs after a time period $\Delta T2$, wherein $\Delta T2 < \Delta t4$.

Therefore, a first event E1 only occurs if voltage $V_D$ includes a strong variation at an instant $t_{E1}$ which takes place after the end of interval $\Delta t4$. On the other hand, a second event E2 occurs if voltage $V_D$ includes a strong variation at an instant $t_{E2}$ during interval $\Delta t4$, typically at the start of interval $\Delta t4$.

In both cases, the control circuit 118' may therefore be configured to verify if voltage $V_D$ includes a strong variation. For example, in various embodiments, the control circuit 118' may detect a strong variation by comparing voltage $V_D$ with a reference voltage $V_{th}$. For example, in the embodiment shown in Figure 7, the control circuit 118' includes a comparator 1180, which is configured to generate a comparison signal E by verifying whether voltage $V_D$ is higher than reference voltage $V_{th}$. In various embodiments, comparator 1180 is an analog comparator. Generally speaking, in unclaimed examples the control circuit 118' may also compare voltage $V_D$ with a first reference voltage $V_{th1}$ during interval $\Delta t4$, and with a second reference voltage $V_{th2}$ after the end of interval $\Delta t4$.

Therefore, if voltage $V_D$ reaches or exceeds reference voltage $V_{th}$, e.g. in response to a rising edge of signal E, control circuit 118' may verify if the instant when reference voltage $V_D$ reaches or exceeds reference voltage $V_{th}$ is indicative of an event of the first type E1 or of the second type E2. As an unclaimed example, to this end the control circuit 118' may verify whether the instant when voltage $V_D$ reaches or exceeds reference voltage $V_{th}$ is before or after instant $t_1'$, and may classify the event as E1 or E2, respectively. As an alternative, the control circuit 118' may also detect the time elapsed from instant $t_4$ (end of interval $\Delta t3$ / start of interval $\Delta t4$), and compare said time period with thresholds.

Specifically, the measurement circuit 122 and/or the threshold $V_{th}$ are suitably sized so that signal $V_D$ does not exceed threshold $V_{th}$ when the voltage variation across the main switch is lower than a maximum value, which however enables discharging the capacitance associated with the main switch. Therefore, in this instance, the control circuit 118' may include a processing circuit 1182, configured to detect:

- an event E2, if voltage $V_D$ reaches or exceeds reference voltage $V_{th}$ (which is revealed e.g. by a rising edge of signal E) before the end of interval $\Delta t4$;

- an event E1, if voltage $V_D$ reaches or exceeds reference voltage $V_{th}$ (which is revealed e.g. by a rising edge of signal E) after the end of interval $\Delta t4$; and

- no event, if voltage $V_D$ does not reach or exceed reference voltage $V_{th}$ (i.e. signal E remains low).

According to the invention, as shown in Figure 11, the processing circuit 1182 may be configured to determine the time $\Delta T$ which has elapsed from the start of interval $t4$ until voltage $V_D$ reaches or exceeds reference voltage $V_{th}$ (shown for example by a rising edge of signal E). Subsequently, the processing circuit 1182 may detect:

- an event E2, if voltage $V_D$ reaches or exceeds reference voltage $V_{th}$, and time $\Delta T$ is lower than a first threshold *TH1* (*ΔT < TH1*);
- an event E1, if voltage $V_D$ reaches or exceeds reference voltage $V_{th}$, and time $\Delta T$ is higher than a second threshold *TH2* (*ΔT > TH2*), with *TH1 < TH2*; and
- no event, if voltage $V_D$ does not reach or exceed reference voltage $V_{th}$, or if voltage $V_D$ reaches or exceeds reference voltage $V_{th}$ and time $\Delta T$ is between the first threshold *TH1* and a second threshold *TH2* (*TH1 < ΔT < TH2*) .

For example, in various embodiments threshold *TH2* is chosen between duration *Δt4* and duration *Δt4 + Δt,* i.e. threshold *TH2* substantially corresponds to duration *Δt4.* On the other hand, threshold *TH1* is lower than duration *Δt4,* for example between 30% and 90% of duration *Δt4,* preferably between 50% and 70% of duration *Δt4.*

Therefore, in various embodiments, the processing circuit 1182 may provide a control signal indicative of the duration of the closed state for the auxiliary switch (e.g. *Δt3*) to the driver circuit 1186, which generates the drive signals $Q_1$ and $Q_2$. Specifically, the processing circuit 1182 may keep unvaried the duration of the interval during which the auxiliary switch is closed when no event is detected, for example when the (absolute) variation of voltage $V_{SW}$ stays below threshold $V_{th}$. On the other hand, the driver circuit 1182 should perform operations which differ for an event E1 and for an event E2.

Specifically, as explained in the foregoing, the first event E1 indicates that the energy provided by reactive element R was not sufficient, because the main switch does not close at zero voltage. Typically, this takes place when the duration of the interval during which the auxiliary switch is closed *(Δt3)* was not sufficiently long. Therefore, in embodiments, in response to said event E1, the processing circuit 1182 increases the duration of said interval.

On the other hand, the second event E2 indicates that the energy provided by reactive element R was excessive, because the ZVS condition for the main switch is reached too rapidly, i.e. at the start of interval *Δt4.* Typically, this takes place when the duration of the interval during which the auxiliary switch is closed *(Δt3)* was too long. Therefore, in embodiments, in response to said event E2, the processing circuit 1182 reduces the duration of said interval.

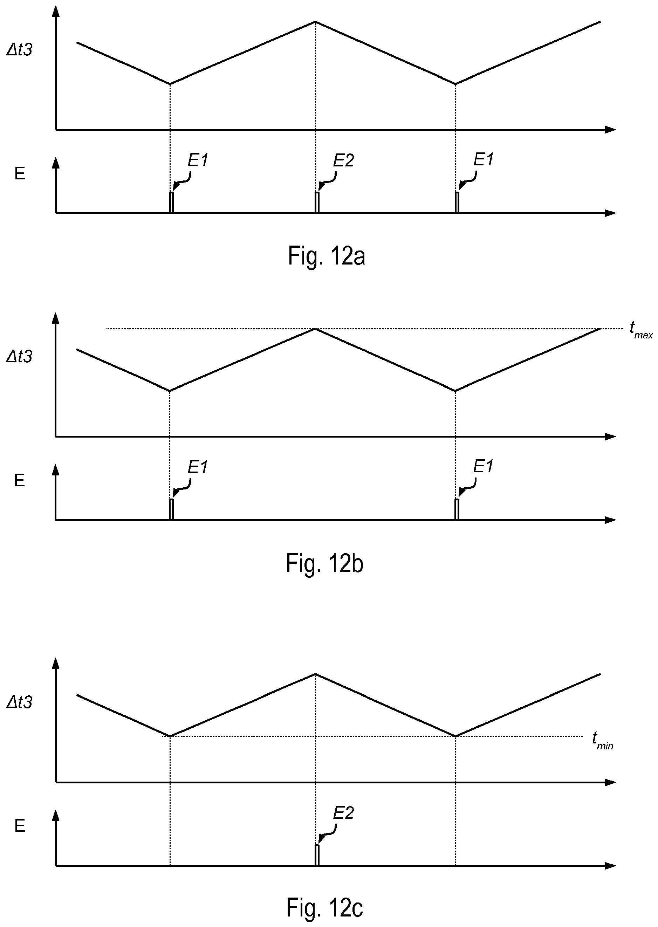

Figures 12a, 12b and 12c show some possible control arrangements for varying the duration during which the auxiliary switch is closed *(Δt3* in the exemplary case) .

For example, as schematically shown in Figure 12a, the processing circuit 1182 may lower the duration of the interval during which the auxiliary switch is closed *(Δt3* in the exemplary case) until an event E1 is detected, indicating that the main switch does not close at zero voltage. Therefore, in response to said event E1, the processing circuit 1182 may increase the duration of the interval during which the auxiliary switch is closed until an event E2 is detected, indicating that the capacitance associated to the main switch is discharged too rapidly. Therefore, in response to said event E2, the processing circuit 1182 may reduce the duration of the interval during which the auxiliary switch is closed. For example, in the presently considered embodiment, the processing circuit 1182 varies time linearly.

However, in unclaimed examples the processing circuit 1182 may also monitor only one of the events E1 or E2.

For example, by detecting only event E1 (figure 12b), the driver circuit 1182 may perform one of the following operations:

- progressively increasing the duration of interval Δt3 until a predetermined maximum value $t_{max}$ is reached; or
- increasing duration *Δt3* immediately to the maximum value $t_{max}$.

In various embodiments, the processing circuit 1182 determines said maximum value $t_{max}$ by adding a constant value *Δtmax* to the value of duration *Δt3* when event E1 is detected.

In various embodiments, once the maximum value $t_{max}$ has been reached, the processing circuit 1182 progressively reduces the duration of the interval, until a new event E1 is detected.

Similarly, by detecting only event E2 (Figure 12c), the processing circuit 1182 may perform one of the following operations:

- progressively reducing the duration of interval Δt3 until a predetermined mimimum value $t_{min}$ is reached; or
- reducing the duration *Δt3* immediately to the minimum value $t_{min}$.

In various embodiments, the driver circuit 1182 may determine said minimum value by subtracting a constant value *Δtmin* from the value of duration *Δt3* when event E2 is detected.

In various embodiments, once the mimimum value $t_{min}$ has been reached, the processing circuit 1182 progressively increases the duration of the interval, until a new event E2 is detected.

In the embodiments described in the foregoing, the control circuit 118' is configured to:

- vary the duration during which the main switch is closed, in such a way as to achieve a required output voltage $V_{out}$ or output current $i_{out}$, e.g. by using an I, PI or PID regulator to this end;

- vary the duration during which the auxiliary switch is closed as a function of signal E; and
- the intermediate intervals $\Delta t2$ and $\Delta t4$ may be constant.

Specifically, by using signal E, the control circuit 118' substantially detects if the energy stored in the reactive element R shortly before the off switching of the auxiliary switch remains within given limits (i.e. it is neither too low, which would generate an event E1, nor too high, which would generate an event E2).

Figure 13 shows an alternative unclaimed example of a processing circuit 1182', which is configured to directly regulate the duration of the interval during which the auxiliary switch is closed $(\Delta t3)$ as a function of the maximum variation of voltage $V_{SW}$ (or similarly the voltage of the main or of the auxiliary switch), or as a function of the maximum amplitude of signal $V_D$, in the interval $(\Delta t4)$ before closing the main switch.

Specifically, in the presently considered example, signal $V_D$ is provided to a sample-and-hold circuit 1190, configured to store a signal indicative of the maximum value of voltage $V_D$ during the interval before closing the main switch (e.g. $\Delta t4$).

For example, in the presently considered example, circuit 1190 is implemented by a capacitor $C_P$ and a diode $D_P$, which transfers voltage $V_D$ to capacitor $C_P$ when voltage $V_D$ is higher than voltage $V_{DP}$ across capacitor $C_P$. Therefore, capacitor $C_P$ represents an analog memory, which stores the maximum value of voltage $V_D$. In various embodiments, a resistor $R_P$ may be connected in parallel to capacitor $C_P$, in such a way as to progressively discharge capacitor $C_P$.

Therefore, as shown in Figure 14, and also considering the discharging of capacitor $C_P$, voltage $V_{DP}$ across capacitor $C_P$ stores the maximum value of signal $V_D$ in the interval $\Delta t4$.

In the presently considered example, the maximum detected value, i.e. voltage $V_{DP}$, is provided to the processing circuit 1182', configured to generate the signal indicative of the duration of interval $\Delta t3$, i.e. of the duration of the interval during which the auxiliary switch is closed. Specifically, because capacitor $C_P$ progressively discharges in the presently considered embodiment, preferably the processing circuit 1182' determines the value for the duration $\Delta t3$ (in the exemplary case) always at the same instant, e.g. at instant $t_1$ when the main switch is closed.

As explained in the foregoing, in the presently considered example, the processing circuit 1182' is configured to determine the value of the duration of interval $\Delta t3$, i.e. of the interval during which the auxiliary switch is closed, as a function of the peak voltage $V_{DP}$.

For example, in various example, the processing circuit 1182' is configured to compare the detected value $V_{DP}$ with a lower threshold and with a higher threshold, and to vary the duration of the interval during which the auxiliary switch is closed, so as to keep the value between said thresholds.

On the other hand, in the example shown in Figure 13, the processing circuit 1182' implements a regulator, configured to regulate the duration of the interval during which the auxiliary switch is closed as a function of the maximum detected variation, i.e. as a function of signal $V_{DP}$.

In the presently considered example, said signal indicative of the required duration of interval $\Delta t3$ is therefore provided to the driver circuit 1186 of switches $S_1$ and $S_2$, which in the presently considered embodiment drives the auxiliary switch $S_2$ correspondingly, i.e. by generating a pulse, wherein the on duration corresponds to the required duration.

Specifically, in the presently considered example, value $V_{DP}$ is provided to a summing node 1192, configured to calculate the difference between value $V_{DP}$ and a required value $V_{ref}$. Subsequently, a regulator 1194, which includes at least an I component, such as e.g. a PI (Proportional-Integral) regulator, varies the signal indicative of the duration of interval $\Delta t3$ until the difference is zero, i.e. until value $V_{DP}$ corresponds to the required value $V_{ref}$.

Generally speaking, the sample-and-hold circuit / the peak value detector 1190, and especially regulator 1192 and/or driver circuit 1186, may also be implemented by a digital circuit, such as e.g. a microprocessor programmed via software code.

As previously explained, a similar control arrangement may be applied when the main switch is switch $S_2$. In this case, the measurement circuit 1190 described in the foregoing may therefore be applied across switch $S_1$. As an alternative, in the present case as well the measurement circuit 122 may monitor voltage $V_{SW}$ across switch $S_2$, specifically the negative variations during interval $\Delta t2$, instead of the positive variations during interval $\Delta t4$ as described in the foregoing.

Generally speaking, the variation frequency of the duration of the interval during which the auxiliary switch is closed may be low as compared to the switching frequency of the switching stage, therefore avoiding an influence on the main control loop by the interval during which the main switch is closed.

Finally, the measurement circuit 122 does not require a high accuracy, because it is sufficient to avoid the events E1 and E2 described in the foregoing (or at least to reduce the number of said events).

Of course, without prejudice to the principle of the invention, the implementation details and the embodiments may vary, even appreciably, with respect to what has been described herein by way of non-limiting example only, without departing from the scope of the invention as defined by the annexed claims.

## LIST OF REFERENCE SIGNS

| | |
|---|---|
| Electronic converter | 10 |
| Input terminal | 102a, 102b |
| Output terminal | 104a, 104b |
| Filter circuit | 106, 110, 116 |
| Rectification circuit | 108, 114 |
| Switching stage | 112, 112' |
| Input terminal | 112a, 112b |
| Control circuit | 118, 118' |
| Comparator | 1180 |
| Processing circuit | 1182 |
| Regulation circuit | 1184 |
| Driver circuit | 1186 |
| Sample-and-hold circuit | 1190 |
| Summing node | 1192 |
| Regulator | 1194 |
| Feedback circuit | 120 |
| Measurement circuit | 122 |
| PFC Electronic converter | 14 |
| Lighting module | 20 |
| Input terminal | 200a, 200b |
| LED string | 22 |
| LED | 220 |
| Current regulator | 24 |
| Capacitive element | $C$ |
| Capacitance | $C_{A1}$, $C_{A2}$ |
| Capacitor | $C_1$, $C_P$, $C_{out}$, $C_{R1}$, $C_{R2}$ |
| Diode | $D_{A1}$, $D_{A2}$, $D_P$ |
| Inductive element | $L$ |
| Magnetizing inductance | $L_M$ |
| Leakage inductance | $L_R$ |
| Resistor | $R_1$, $R_2$, $R_P$ |
| Reactive circuit | $R$ |
| Electronic switch | $S_1$, $S_2$ |
| Trasformer | $T$ |
| Primary winding | T1 |
| Secondary winding | T2 |
| Drive signal | $DRV$, $Q_1$, $Q_2$ |
| Comparison signal | $E$ |
| Event | $E1$, $E2$ |
| Feedback signal | $FB_{REG}$ |
| Input current | $i_{in}$ |
| Current feeding reactive element R | $i_L$ |
| Output current | $i_{out}$ |
| Reference signal | $REF$ |
| Time interval | $\Delta t1$, $\Delta t2$, $\Delta t3$, $\Delta t4$ |
| Time | $\Delta T$, $\Delta T1$, $\Delta T2$ |
| Time threshold | $TH1$, $TH2$ |
| Bus voltage | $V_{bus}$ |
| Measurement signal | $V_D$ |

(continued)

| Input voltage | $V_{in,AC}$ |
| Rectified voltage | $V_{in,DC}$ |
| Output voltage | $V_{out}$ |
| Reference voltage | $V_{ref}$ |
| Voltage between switches $S_1$ and $S_2$ | $V_{SW}$ |
| Voltage threshold | $V_{th}$ |

**Claims**

1. An electronic converter (10) comprising:

   - two input terminals (112a, 112b) for receiving a DC input voltage ($V_{bus}$);
   - two output terminals (104a, 104b) for providing a regulated voltage ($V_{out}$) or a regulated current ($i_{out}$);
   - two electronic switches ($S_1$, $S_2$) connected in series between said two input terminals (112a, 112b), wherein a respective capacitance ($C_{A1}$, $C_{A2}$) is associated with each of said two electronic switches ($S_1$, $S_2$), wherein one of said two electronic switches ($S_1$, $S_2$) represents a main switch ($S_1$; $S_2$) and the other of said two electronic switches ($S_1$, $S_2$) represents an auxiliary switch ($S_2$; $S_1$);
   - a reactive circuit (R) including at least one inductive element (L, T) and at least one capacitive element ($C_{out}$, $C_{R1}$, $C_{R2}$) and connected between the intermediate point between said two electronic switches ($S_1$, $S_2$) and said two output terminals (104a, 104b);
   - a measurement circuit (122) configured to detect a measurement signal *($V_D$)* indicative of the derivative of the voltage ($V_{SW}$) across said main switch ($S_1$; $S_2$) or said auxiliary switch ($S_2$; $S_1$); and
   - a control circuit (118') configured to drive (1186) the switching of said two electronic switches ($S_1$, $S_2$) via respective drive signals ($Q_1$, $Q_2$), wherein said control circuit (118') is configured to repeat the following steps periodically:

     - while said auxiliary switch ($S_2$; $S_1$) is opened, closing said main switch ($S_1$; $S_2$) for a first interval *($\Delta t1$; $\Delta t3$)*;
     - opening said auxiliary switch ($S_2$; $S_1$) and said main switch ($S_1$; $S_2$) for a second interval *($\Delta t2$; $\Delta t4$)* ;
     - while said main switch ($S_1$; $S_2$) is opened, closing said auxiliary switch ($S_2$; $S_1$) for a third interval *($\Delta t3$; $\Delta t1$)*;
     - opening said auxiliary switch ($S_2$; $S_1$) and said main switch ($S_1$; $S_2$) for a fourth interval *($\Delta t4$; $\Delta t2$)* ;

   wherein said control circuit (118') is configured to:

     - vary (1184) the duration of said first interval *($\Delta t1$; $\Delta t3$)* as a function of said regulated voltage ($V_{out}$) or said regulated current ($i_{out}$); and
     - vary (1182; 1182') the duration of said third interval *($\Delta t3$; $\Delta t1$)* as a function of said measurement signal ($V_D$)

   **characterized in that** the duration of said fourth interval *($\Delta t4$; $\Delta t2$)* is constant, and wherein said control circuit (118') is configured to:

     - compare (1190) the amplitude of said measurement signal *($V_D$)* during said fourth interval *($\Delta t4$; $\Delta t2$)* and said first interval *($\Delta t1$; $\Delta t3$)* with a reference value ($V_{th}$);
     - measure the time *($\Delta T$)* past from the start of said fourth interval *($\Delta t4$; $\Delta t2$)* until the amplitude of said measurement signal ($V_D$) exceeds said reference value *($V_{th}$);*
     - detect, as a first event (E2), a case in which said measured time *($\Delta T$)* is smaller than a first threshold (TH1) and, in response to said first event (E2), reduce (1182) the duration of said third interval *($\Delta t3$; $\Delta t1$)*; and
     - detect, as a second event (E1), a case in which said measured time *($\Delta T$)* is greater than a second threshold (TH2) and, in response to said second event (E1), increase (1182) the duration of said third interval *($\Delta t3$; $\Delta t1$)*;

   wherein said control circuit (118') is configured to:

     - in case said measurement signal *($V_D$)* does not exceed said reference value ($V_{th}$), or if said time *($\Delta T$)* is between the first threshold *(TH1)* and the second threshold *(TH2)*:

- keep unvaried the duration of said third interval ($\Delta t3$; $\Delta t1$); or alternatively
- if said first event (E2) was the last event detected, reduce the duration of said third interval ($\Delta t3$; $\Delta t1$) and, if said second event (E1) was the last event detected, increase the duration of said third interval ($\Delta t3$; $\Delta t1$).

2. The electronic converter (10) according to any of the previous claims, wherein said two input terminals (112a, 112b) comprise a positive terminal (112) and a negative terminal (112b), and wherein:

- said main switch ($S_1$) is connected to said positive terminal (112a) and said auxiliary switch ($S_2$) is connected to said negative terminal (112b); or
- said main switch ($S_2$) is connected to said negative terminal (112b) and said auxiliary switch ($S_1$) is connected to said positive terminal (112a).

3. The electronic converter (10) according to Claim 2, wherein said measurement circuit (122) comprises an analog differentiator which receives at input the voltage ($V_{SW}$) between the intermediate point between said two electronic switches ($S_1$, $S_2$) and said negative terminal (112b).

4. The electronic converter (10) according to any of the previous claims, wherein said measurement circuit (122) comprises a capacitor ($C_1$) and one or more resistors ($R_1$, $R_2$), and wherein said measurement signal ($V_D$) corresponds to the voltage at one of said one or more resistors ($R_1$, $R_2$).

5. A lighting system comprising a lighting module (20) and an electronic converter (10) according to any of the previous claims.

6. A method of operating an electronic converter (10) according to any of the previous claims 1 to 12, comprising:

- driving (1186) said main switch ($S_1$; $S_2$) and said auxiliary switch ($S_2$; $S_1$), wherein

- said main switch ($S_1$; $S_2$) is closed and said auxiliary switch ($S_2$; $S_1$) is opened during a first interval ($\Delta t1$; $\Delta t3$);
- said main switch ($S_1$; $S_2$) and said auxiliary switch ($S_2$; $S_1$) are opened during a second interval *($\Delta t2$; $\Delta t4$)*;
- said main switch ($S_1$; $S_2$) is opened and said auxiliary switch ($S_2$; $S_1$) is closed during a third interval ($\Delta t3$; $\Delta t1$);
- said main switch ($S_1$; $S_2$) and said auxiliary switch ($S_2$; $S_1$) are opened during a fourth interval *($\Delta t2$; $\Delta t4$)*, wherein the duration of said fourth interval *($\Delta t4$; $\Delta t2$)* is constant;

- detecting (122) a measurement signal ($V_D$) indicative of the derivative of the voltage ($V_{SW}$) at said main switch ($S_1$; $S_2$) or said auxiliary switch ($S_2$; $S_1$);
- varying (1184) the duration of said first interval ($\Delta t1$; $\Delta t3$) as a function of said regulated voltage ($V_{out}$) or said regulated current ($i_{out}$); and
- varying (1194) the duration of said third interval ($\Delta t3$; $\Delta t1$) as a function of said measurement signal ($V_D$) by:

- comparing (1190) the amplitude of said measurement signal *($V_D$)* during said fourth interval *($\Delta t4$; $\Delta t2$)* and said first interval ($\Delta t1$; $\Delta t3$) with a reference value ($V_{th}$);
- measuring the time *($\Delta T$)* past from the start of said fourth interval *($\Delta t4$; $\Delta t2$)* until the amplitude of said measurement signal *($V_D$)* exceeds said reference value ($V_{th}$);
- detecting, as a first event (E2), a case in which said measured time *($\Delta T$)* is smaller than a first threshold *(TH1)* and, in response to said first event (E2), reducing (1182) the duration of said third interval ($\Delta t3$; $\Delta t1$); and
- detecting, as a second event (E1), a case in which said measured time *($\Delta T$)* is greater than a second threshold (TH2) and, in response to said second event (E1), increasing (1182) the duration of said third interval ($\Delta t3$; $\Delta t1$); wherein said varying (1194) the duration of said third interval ($\Delta t3$; $\Delta t1$) as a function of said measurement signal *($V_D$)* comprises:
- in case said measurement signal *($V_D$)* does not exceed said reference value ($V_{th}$), or if said time *($\Delta T$)* is between the first threshold *(TH1)* and the second threshold *(TH2)*:

- keeping unvaried the duration of said third interval ($\Delta t3$; $\Delta t1$); or alternatively

- if said first event (E2) was the last event detected, reducing the duration of said third interval ($\Delta t3$; $\Delta t1$) and if said second event (E1) was the last event detected, increasing the duration of said third interval ($\Delta t3$; $\Delta t1$).

**Patentansprüche**

1. Elektronischer Wandler (10), umfassend:

   - zwei Eingangsanschlüsse (112a, 112b) zum Empfangen einer Eingangsgleichspannung (Vbus);
   - zwei Ausgangsanschlüsse (104a, 104b) zum Bereitstellen einer geregelten Spannung (Vout) oder eines geregelten Stroms (iout);
   - zwei elektronische Schalter (S1, S2), die zwischen den zwei Eingangsanschlüssen (112a, 112b) in Reihe geschaltet sind, wobei jedem der zwei elektronischen Schalter (S1, S2) eine jeweilige Kapazität (CA1, CA2) zugeordnet ist, wobei einer der zwei elektronischen Schalter (S1, S2) einen Hauptschalter (S1; S2) darstellt und der andere der zwei elektronischen Schalter (S1, S2) einen Hilfsschalter (S2; S1) darstellt;
   - eine reaktive Schaltung (R), die mindestens ein induktives Element (L, T) und mindestens ein kapazitives Element (Cout, CR1, CR2) beinhaltet und zwischen dem Zwischenpunkt zwischen den zwei elektronischen Schaltern (S1, S2) und den zwei Ausgangsanschlüssen (104a, 104b) geschaltet ist;
   - eine Messschaltung (122), die konfiguriert ist, um ein Messsignal (VD) zu detektieren, das die Ableitung der Spannung (Vsw) über den Hauptschalter (S1; S2) oder den Hilfsschalter (S2; S1) angibt; und
   - eine Steuerschaltung (118'), die konfiguriert ist, um das Schalten der zwei elektronischen Schalter (S1, S2) über jeweilige Ansteuersignale (Q1, Q2) anzusteuern (1186), wobei die Steuerschaltung (118') konfiguriert ist, um die folgenden Schritte periodisch zu wiederholen:

     - während der Hilfsschalter (S2; S1) geöffnet ist, Schließen des Hauptschalters (S1; S2) für ein erstes Intervall ($\Delta$t1; $\Delta$t3);
     - Öffnen des Hilfsschalters (S2; S1) und des Hauptschalters ($S_1$; S2) für ein zweites Intervall ($\Delta$t2; $\Delta$t4);
     - während der Hauptschalter ($S_1$; S2) geöffnet ist, Schließen des Hilfsschalters (S2; S1) für ein drittes Intervall ($\Delta$t3; $\Delta$t1);
     - Öffnen des Hilfsschalters ($S_2$; S1) und des Hauptschalters ($S_1$; S2) für ein viertes Intervall ($\Delta$t4; $\Delta$t2);

   wobei die Steuerschaltung (118') konfiguriert ist, zum:

     - Variieren (1184) der Dauer des ersten Intervalls ($\Delta$t1; $\Delta$t3) als eine Funktion der geregelten Spannung (Vout) oder des geregelten Stroms (iout); und
     - Variieren (1182; 1182') der Dauer des dritten Intervalls ($\Delta$t3; $\Delta$t1) als eine Funktion des Messsignals (VD)

   **dadurch gekennzeichnet, dass** die Dauer des vierten Intervalls ($\Delta$t4; $\Delta$t2) konstant ist, und wobei die Steuerschaltung (118') konfiguriert ist zum:

     - Vergleichen (1190) der Amplitude des Messsignals (VD) während des vierten Intervalls ($\Delta$t4; $\Delta$t2) und des ersten Intervalls ($\Delta$t1; $\Delta$t3) mit einem Referenzwert (Vth);
     - Messen der Zeit ($\Delta$T), die seit dem Beginn des vierten Intervalls ($\Delta$t4; $\Delta$t2) vergangen ist, bis die Amplitude des Messsignals (VD) den Referenzwert (Vth) überschreitet;
     - Erkennen, als ein erstes Ereignis (E2), eines Falls, in dem die gemessene Zeit *($\Delta$T)* kleiner als ein erster Schwellenwert *(TH1)* ist, und, als Reaktion auf das erste Ereignis (E2), Reduzieren (1182) der Dauer des dritten Intervalls ($\Delta$t3; $\Delta$t1); und
     - Erkennen, als ein zweites Ereignis (E1), eines Falls, in dem die gemessene Zeit *($\Delta$T)* größer als ein zweiter Schwellenwert (TH2) ist, und, als Reaktion auf das zweite Ereignis (E1), Erhöhen (1182) der Dauer des dritten Intervalls ($\Delta$t3; $\Delta$t1);

   wobei die Steuerschaltung (118') konfiguriert ist zum:

     - falls das Messsignal (VD) den Referenzwert (Vth) nicht überschreitet oder falls die Zeit *($\Delta$T)* zwischen dem ersten Schwellenwert (TH1) und dem zweiten Schwellenwert (TH2) liegt:

       - Unverändert-Halten der Dauer des dritten Intervalls ($\Delta$t3; $\Delta$t1); oder alternativ
       - falls das erste Ereignis (E2) das letzte erkannte Ereignis war, Reduzieren der Dauer des dritten Intervalls ($\Delta$t3; $\Delta$t1) und,
       - falls das zweite Ereignis (E1) das letzte erkannte Ereignis war, Erhöhen der Dauer des dritten Intervalls ($\Delta$t3; $\Delta$t1).

2. Elektronischer Wandler (10) nach einem der vorhergehenden Ansprüche, wobei die zwei Eingangsanschlüsse (112a, 112b) einen positiven Anschluss (112a) und einen negativen Anschluss (112b) umfassen, und wobei:

- der Hauptschalter (S1) mit dem positiven Anschluss (112a) verbunden ist und der Hilfsschalter ($S_2$) mit dem negativen Anschluss (112b) verbunden ist; oder
- der Hauptschalter (S2) mit dem negativen Anschluss (112b) verbunden ist und der Hilfsschalter (S1) mit dem positiven Anschluss (112a) verbunden ist.

3. Elektronischer Wandler (10) nach Anspruch 2, wobei die Messschaltung (122) einen analogen Differenzierer umfasst, der am Eingang die Spannung (Vsw) zwischen dem Zwischenpunkt zwischen den zwei elektronischen Schaltern (S1, S2) und dem negativen Anschluss (112b) empfängt.

4. Elektronischer Wandler (10) nach einem der vorhergehenden Ansprüche, wobei die Messschaltung (122) einen Kondensator (C1) und einen oder mehrere Widerstände ($R_1$, R2)umfasst, und wobei das Messsignal (VD) der Spannung an einem des einen oder der mehreren Widerstände (R1, R2) entspricht.

5. Beleuchtungssystem, umfassend ein Beleuchtungsmodul (20) und einen elektronischen Wandler (10) nach einem der vorhergehenden Ansprüche.

6. Verfahren zum Betreiben eines elektronischen Wandlers (10) nach einem der vorhergehenden Ansprüche 1 bis 4, umfassend:

- Treiben (1186) des Hauptschalters ($S_1$; S2) und des Hilfsschalters ($S_2$; S1), wobei

- der Hauptschalter ($S_1$; S2) geschlossen ist und der Hilfsschalter (S2; S1) während eines ersten Intervalls ($\Delta$t1; $\Delta$t3) geöffnet ist;
- der Hauptschalter (S1; S2) und der Hilfsschalter (S2; S1) während eines zweiten Intervalls ($\Delta$t2; $\Delta$t4) geöffnet sind;
- der Hauptschalter (S1; S2) geöffnet ist und der Hilfsschalter (S2; S1) während eines dritten Intervalls ($\Delta$t3; $\Delta$t1) geschlossen ist;
- der Hauptschalter (S1; S2) und der Hilfsschalter (S2; S1) während eines vierten Intervalls ($\Delta$t2; $\Delta$t4) geöffnet sind, wobei die Dauer des vierten Intervalls ($\Delta$t4; $\Delta$t2) konstant ist;

- Detektieren (122) eines Messsignals (VD), das die Ableitung der Spannung (Vsw) an dem Hauptschalter (S1; S2) oder dem Hilfsschalter (S2; S1) angibt;
- Variieren (1184) der Dauer des ersten Intervalls ($\Delta$t1; $\Delta$t3) als eine Funktion der geregelten Spannung (Vout) oder des geregelten Stroms (iout); und
- Variieren (1194) der Dauer des dritten Intervalls ($\Delta$t3; $\Delta$t1) als eine Funktion des Messsignals (VD) durch:
1- Vergleichen (1190) der Amplitude des Messsignals (VD) während des vierten Intervalls ($\Delta$t4; $\Delta$t2) und des ersten Intervalls ($\Delta$t1; $\Delta$t3) mit einem Referenzwert (VL1);
- Messen der Zeit ($\Delta$T), die seit dem Beginn des vierten Intervalls ($\Delta$t4; $\Delta$t2) vergangen ist, bis die Amplitude des Messsignals (VD) den Referenzwert (Vth) überschreitet;

- Erkennen, als ein erstes Ereignis (E2), eines Falls, in dem die gemessene Zeit ($\Delta$T) kleiner als ein erster Schwellenwert (TH1) ist, und, als Reaktion auf das erste Ereignis (E2), Reduzieren (1182) der Dauer des dritten Intervalls ($\Delta$t3; $\Delta$t1); und
- Erkennen, als ein zweites Ereignis (E1), eines Falls, in dem die gemessene Zeit ($\Delta$T) größer als ein zweiter Schwellenwert (TH2) ist, und, als Reaktion auf das zweite Ereignis (E1), Erhöhen (1182) der Dauer des dritten Intervalls ($\Delta$t3; $\Delta$t1);

wobei das Variieren (1194) der Dauer des dritten Intervalls ($\Delta$t3; $\Delta$t1) als eine Funktion des Messsignals (VD) umfasst:

- falls das Messsignal (VD) den Referenzwert nicht überschreitet oder falls die Zeit ($\Delta$T) zwischen dem ersten Schwellenwert (TH1) und dem zweiten Schwellenwert (TH2) liegt:

- Unverändert-Halten der Dauer des dritten Intervalls ($\Delta$t3; $\Delta$t1); oder alternativ
- falls das erste Ereignis (E2) das letzte erkannte Ereignis war, Reduzieren der Dauer des dritten Intervalls ($\Delta$t3; $\Delta$t1) und, falls das zweite Ereignis (E1) das letzte erkannte Ereignis war, Erhöhen der Dauer des dritten Intervalls (Δt3; Δt1).

## Revendications

1.  Un convertisseur électronique (10) comprenant :

    - deux bornes d'entrée (112a, 112b) destinées à recevoir une tension continue d'entrée ($V_{bus}$) ;
    - deux bornes de sortie (104a, 104b) destinées à délivrer une tension régulée ($V_{out}$) ou un courant régulé ($i_{out}$) ;
    - deux commutateurs électroniques ($S_1$, $S_2$) montés en série entre lesdites deux bornes d'entrée (112a,112b), une capacité respective ($C_{A1}$, $C_{A2}$) étant associée à chacun desdits deux commutateurs électroniques ($S_1$, $S_2$), l'un desdits deux commutateurs électroniques ($S_1$, $S_2$) représentant un commutateur principal ($S_1$; $S_2$) et l'autre desdits deux commutateurs électroniques ($S_1$, $S_2$) représentant un commutateur auxiliaire ($S_2$; $S_1$) ;
    - un circuit réactif (R) comprenant au moins un élément inductif (L, T) et au moins un élément capacitif ($C_{out}$, $C_{R1}$, $C_{R2}$), et monté entre le point milieu situé entre lesdits deux commutateurs électroniques ($S_1$, $S_2$) et lesdites deux bornes de sortie (104a, 104b) ;
    - un circuit de mesure (122) configuré pour détecter un signal de mesure ($V_D$) représentatif de la dérivée de la tension ($V_{SW}$) entre les bornes dudit commutateur principal ($S_1$; $S_2$) ou dudit commutateur auxiliaire ($S_2$; $S_1$) ; et
    - un circuit de contrôle (118') configuré pour piloter (1186) la commutation desdits deux commutateurs électroniques ($S_1$, $S_2$) par l'intermédiaire de signaux de pilotage respectifs ($Q_1$, $Q_2$), ledit circuit de contrôle (118') étant configuré pour répéter de façon périodique les étapes suivantes :

        - lorsque ledit commutateur auxiliaire ($S_2$; $S_1$) est ouvert, fermeture dudit commutateur principal ($S_1$; $S_2$) pendant un premier intervalle (Δt1 ; Δt3) ;
        - ouverture dudit commutateur auxiliaire ($S_2$; $S_1$) et dudit commutateur principal ($S_1$; $S_2$) pendant un second intervalle (Δt2 ; Δt4) ;
        - lorsque ledit commutateur principal ($S_1$; $S_2$) est ouvert, fermeture dudit commutateur auxiliaire ($S_2$; $S_1$) pendant un troisième intervalle (Δt3 ; Δt1) ;
        - ouverture dudit commutateur auxiliaire ($S_2$; $S_1$) et dudit commutateur principal ($S_1$; $S_2$) pendant un quatrième intervalle (Δt4 ; Δt2) ;

    dans lequel ledit circuit de contrôle (118') est configuré pour :

        - faire varier (1184) la durée dudit premier intervalle (Δt1 ; Δt3) en fonction de ladite tension régulée ($V_{out}$) ou dudit courant régulé ($i_{out}$) ; et
        - faire varier (1182; 1182') la durée dudit troisième intervalle (Δt3; Δt1) en fonction dudit signal de mesure ($V_D$), **caractérisé en ce que** la durée dudit quatrième intervalle (Δt4; Δt2) est constante,
    et dans lequel ledit circuit de contrôle (118') est configuré pour :

        - comparer (1190) à une valeur de référence ($V_{th}$) l'amplitude dudit signal de mesure ($V_D$) pendant ledit quatrième intervalle (Δt4; Δt2) et ledit premier intervalle (Δt1; Δt3) ;
        - mesurer le temps (ΔT) écoulé depuis le début dudit quatrième intervalle (Δt4; Δt2) jusqu'à ce que l'amplitude dudit signal de mesure ($V_D$) dépasse ladite valeur de référence ($V_{th}$) ;
        - détecter, en tant que premier événement (E2), un cas dans lequel ledit temps mesuré (ΔT) est au-dessous d'un premier seuil (TH1) et, en réponse audit premier événement (E2), réduire (1182) la durée dudit troisième intervalle (Δt3; Δt1); et
        - détecter, en tant que second événement (E1), un cas dans lequel ledit temps mesuré (ΔT) est au-dessus d'un second seuil (TH2) et, en réponse audit second événement (E1), augmenter (1182) la durée dudit troisième intervalle (Δt3; Δt1);

    dans lequel ledit circuit de contrôle (118') est configuré pour :

        - dans le cas où ledit signal de mesure ($V_D$) ne dépasse pas ladite valeur de référence ($V_{th}$), ou si ledit temps (ΔT) est compris entre le premier seuil (TH1) et le second seuil (TH2) ;
        - maintenir sans changement la durée dudit troisième intervalle (Δt3; Δt1); ou, en variante
        - si ledit premier événement (E2) a été le dernier événement détecté, réduire la durée dudit troisième intervalle (Δt3; Δt1) et, si ledit second événement (E1) a été le dernier événement détecté, augmenter la durée dudit troisième intervalle (Δt3; Δt1).

**2.** Le convertisseur électronique (10) selon la revendication précédente, dans lequel lesdites deux bornes d'entrée (112a, 112b) comprennent une borne positive (112a) et une borne négative (112b), et dans lequel :

- ledit commutateur principal ($S_1$) est relié à ladite borne positive (112a) et ledit commutateur auxiliaire ($S_2$) est relié à ladite borne négative (112b); ou
- ledit commutateur principal ($S_2$) est relié à ladite borne négative (112b) et ledit commutateur auxiliaire ($S_1$) est relié à ladite borne positive (112a).

**3.** Le convertisseur électronique (10) selon la revendication 2, dans lequel ledit circuit de mesure (122) comprend un différentiateur analogique qui reçoit en entrée la tension ($V_{SW}$) entre le point milieu situé entre les deux commutateurs électroniques ($S_1$, $S_2$) et ladite borne négative (112b).

**4.** Le convertisseur électronique (10) selon l'une des revendications précédentes, dans lequel ledit circuit de mesure (122) comprend un condensateur ($C_1$) et une ou plusieurs résistances ($R_1$, $R_2$), et dans lequel ledit signal de mesure ($V_D$) correspond à la tension sur l'une desdites une ou plusieurs résistances ($R_1$, $R_2$).

**5.** Un système d'éclairage comprenant un module d'éclairage (20) et un convertisseur électronique (10) selon l'une des revendications précédentes.

**6.** Un procédé de mise en œuvre d'un convertisseur électronique (10) selon l'une des revendications 1 à 4 précédentes, comprenant :

- le pilotage (1186) dudit commutateur principal ($S_1$; $S_2$) et dudit commutateur auxiliaire ($S_2$; $S_1$), où:

- ledit commutateur principal ($S_1$; $S_2$) est fermé et ledit commutateur auxiliaire ($S_2$; $S_1$) est ouvert pendant un premier intervalle (*Δt1*; *Δt3*);
- ledit commutateur principal ($S_1$; $S_2$) et ledit commutateur auxiliaire ($S_2$; $S_1$) sont ouverts pendant un second intervalle (*Δt2*; *Δt4*);
- ledit commutateur principal ($S_1$; $S_2$) est ouvert et ledit commutateur auxiliaire ($S_2$; $S_1$) est fermé pendant un troisième intervalle (*Δt3*; *Δt1*);
- ledit commutateur principal ($S_1$; $S_2$) et ledit commutateur auxiliaire ($S_2$; $S_1$) sont ouverts pendant un quatrième intervalle (*Δt2*; *Δt4*), la durée dudit quatrième intervalle (*Δt4*; *Δt2*) étant constante;

- la détection (122) d'un signal de mesure ($V_D$) représentatif de la dérivée de la tension ($V_{SW}$) sur ledit commutateur principal ($S_1$; $S_2$) ou ledit commutateur auxiliaire ($S_2$; $S_1$);
- la variation (1184) de la durée dudit premier intervalle (*Δt1*; *Δt3*) en fonction de ladite tension régulée ($V_{out}$) ou dudit courant régulé ($i_{out}$); et
- la variation (1194) de la durée dudit troisième intervalle (*Δt3*; *Δt1*) en fonction dudit signal de mesure ($V_D$) par:

- comparaison (1190) à une valeur de référence ($V_{th}$) de l'amplitude dudit signal de mesure ($V_D$) pendant ledit quatrième intervalle (*Δt4*; *Δt2*) et ledit premier intervalle (*Δt1*; *Δt3*);
- mesure du temps (*ΔT*) écoulé depuis le début dudit quatrième intervalle (*Δt4*; *Δt2*) jusqu'à ce que l'amplitude dudit signal de mesure ($V_D$) dépasse ladite valeur de référence ($V_{th}$);
- détection, en tant que premier événement (E2), d'un cas dans lequel ledit temps mesuré (*ΔT*) est au-dessous d'un premier seuil (TH1) et, en réponse audit premier événement (E2), réduction (1182) de la durée dudit troisième intervalle (*Δt3*; *Δt1*); et
- détection, en tant que second événement (E1), d'un cas dans lequel ledit temps mesuré (*ΔT*) est au-dessus d'un second seuil (TH2) et, en réponse audit second événement (E1), augmentation (1182) de la durée dudit troisième intervalle (*Δt3*; *Δt1*);

dans lequel ladite variation (1194) de la durée dudit troisième intervalle (*Δt3*; *Δt1*) en fonction dudit signal de mesure ($V_D$) comprend :

- dans le cas où ledit signal de mesure ($V_D$) ne dépasse pas ladite valeur de référence ($V_{th}$), ou si ledit temps (*ΔT*) est compris entre le premier seuil (TH1) et le second seuil (TH2) :

- le maintien sans changement de la durée dudit troisième intervalle (*Δt3*; *Δt1*); ou, en variante
- si ledit premier événement (E2) a été le dernier événement détecté, la réduction de la durée dudit troisième

intervalle ($\Delta t3$; $\Delta t1$) et, si ledit second événement (E1) a été le dernier événement détecté, l'augmentation de la durée dudit troisième intervalle ($\Delta t3$; $\Delta t1$).

Fig. 1

Fig. 2

Fig. 3

Fig. 4

Fig. 5

Fig. 6

Fig. 7

Fig. 8

Fig. 9

Fig. 10

Fig. 11

Fig. 12a

Fig. 12b

Fig. 12c

Fig. 13

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016055923 A
- US 2014312868 A1
- US 7450404 B2
- US 20160141960 A1

### Non-patent literature cited in the description

- **L. WUIDART.** Application Note - Topologies For Switched Mode Power Supplies. *STMicroelectronics,* 1999
- Zero Voltage Switching Resonant Power Conversion. APPLICATION NOTE U138. Texas Instruments, 1999